# DEMANDE DE BREVET EUROPEEN

(11) **EP 2 605 218 A1**
(43) Date de publication de la demande: **19.06.2013**
(21) Numéro de dépôt: 11306659.1
(22) Date de dépôt: 14.12.2011
(51) Int. Cl.: G07D 7/00

(54) **Procédé de sécurisation d'un document électronique**

(71) Demandeur: Gemalto SA, 92190 Meudon (FR)
(72) Inventeur: Rouchouze, Bruno, 92190 Meudon (FR); Barral, Claude, 92190 Meudon (FR); Guerassimo, Michael, 92190 Meudon (FR)

(57) **Abrégé**

La présente invention a pour objet un procédé de sécurisation d'un document électronique. En particulier, la présente invention est relative à un procédé d'anti-falsification de document dans lequel une puce électronique est incorporée. Pour ce faire, l'invention propose un procédé dans lequel des données portées sur le support du document sont associées à une empreinte numérique du document de sorte à les rendre indissociables. Cette empreinte numérique est déterminée en fonction de grandeurs physiques mesurables de la puce électronique ou du support. L'invention permet ainsi que les protections physiques du support du document et les protections de la puce soient combinées de sorte à renforcer le niveau de sécurité desdits documents.

## Description

### Domaine de l'invention

La présente invention a pour objet un procédé de sécurisation d'un document électronique. En particulier, la présente invention est relative à un procédé d'anti-falsification de document dans lequel une puce électronique est incorporée. L'invention a également pour objet un système mettant en oeuvre un tel procédé d'anti-falsification

Un but de la présente invention est de protéger tout document comprenant une puce électronique des tentatives de falsification. La présente invention a également pour but de garantir l'intégrité de tels documents (c'est-à-dire le fait qu'ils n'ont pas été altérés ou modifiés).

### Etat de la technique

Afin de diminuer le taux de falsification de certains documents, notamment officiels tels que des passeports ou des cartes d'identité, des puces électroniques ont été incorporées à ces documents. L'ajout de telles puces électroniques permet de renforcer l'intégrité de tels documents. En effet, aujourd'hui, on connaît de nombreux moyens pour sécuriser une carte à puce contre la copie ou la falsification, notamment par insertion d'un hologramme en surface. Cependant, les contrefacteurs sont de plus en plus capables de reproduire ces moyens. On connaît aussi des cartes à puce comportant, en mémoire, des données d'identification biométrique de leur porteur. Par exemple, ces données représentent le visage, la main ou l'empreinte du porteur de la carte. Cependant, les contrefacteurs bien qu'incapables de connaître les algorithmes mis en oeuvre par la puce, sont maintenant capables de recopier la puce elle-même et son contenu sur un autre document.

La garantie de l'intégrité et de l'anti-falsification de document comprenant une puce électronique est de ce fait un challenge permanent. Aujourd'hui, les mesures de sécurité combinent de plus en plus différentes technologies pour protéger de tels documents face à de nouvelles attaques sans cesse plus complexes.

Un des buts de l'invention est de remédier à des problèmes, inconvénients ou insuffisances de l'état de la technique et/ou d'y apporter des améliorations.

### Exposé de l'invention

L'invention a justement pour but de répondre à ce besoin. Pour cela, l'invention propose un procédé de sécurisation de document électronique de sorte à rendre la falsification de tels documents quasi impossible. Pour ce faire, l'invention propose un procédé dans lequel les protections physiques du document et les protections de la puce sont combinées de sorte à renforcer le niveau de sécurité desdits documents.

L'invention propose à cet effet un procédé dans lequel des données portées sur le support du document sont associées à une empreinte numérique du document de sorte à les rendre indissociables. Cette empreinte numérique est déterminée en fonction de la grandeur de la puce électronique ou du support.

L'invention a pour but de garantir que le composant électronique et ses données sont utilisés sur le bon support du document et qu'il n'y a pas eu récupération d'un élément du document pour générer un nouveau document contrefait.

L'invention a pour objet un procédé de sécurisation d'un document électronique dans laquelle une puce électronique est incorporée dans un support dudit document, ledit procédé comprenant les étapes suivantes :
- détermination d'une empreinte numérique du document en fonction d'une mesure, d'une grandeur physique de la puce électronique ou du support dudit document,
- signature d'au moins une donnée de contrôle portée sur le support ou stockée dans la puce avec l'empreinte numérique du document,
- stockage de cette signature dans un serveur de vérification pour une phase ultérieure de contrôle de l'authenticité du support et de la puce du document.

L'invention a également pour objet un système de sécurisation de document électronique comprenant un serveur de confiance de vérification interposé entre un document électronique dans lequel une puce électronique est incorporée dans son support et un terminal de contrôle, ledit système comprenant des moyens aptes à exécuter le procédé de sécurisation de l'invention.

### Brève description des dessins

L'invention sera mieux comprise à la lecture de la description qui suit et à l'examen des figures qui l'accompagnent. Celles-ci sont présentées à titre indicatif et nullement limitatif de l'invention.
La figure 1 montre une représentation schématique d'un mode d'architecture d'un système destiné à sécuriser un document incorporant une puce électronique.
La figure 2 montre une illustration d'étapes correspondant à un mode de fonctionnement d'une phase d'enrôlement du document à un serveur distant.
La figure 3 montre une illustration d'étapes correspondant à un mode de fonctionnement du procédé de l'invention.

### Description détaillée de modes de réalisation de l'invention

La présente invention va maintenant être décrite en détail en référence à quelques modes de réalisation préférés, comme illustré dans les dessins annexés. Dans la description suivante, de nombreux détails spécifiques sont prévus afin d'offrir une compréhension approfondie de la présente invention. Il sera évident, cependant, à un homme de l'art, que la présente invention peut être pratiquée sans tout ou partie de ces détails spécifiques.

Afin de ne pas obscurcir inutilement la description de la présente invention, des structures bien connues, des dispositifs ou des algorithmes n'ont pas été décrits en détail.

Il est à rappeler que, dans la description, quand une action est attribuée à un programme ou à un appareil comprenant un microprocesseur, cette action est exécutée par le microprocesseur commandé par des codes instructions enregistrés dans une mémoire de cet appareil.

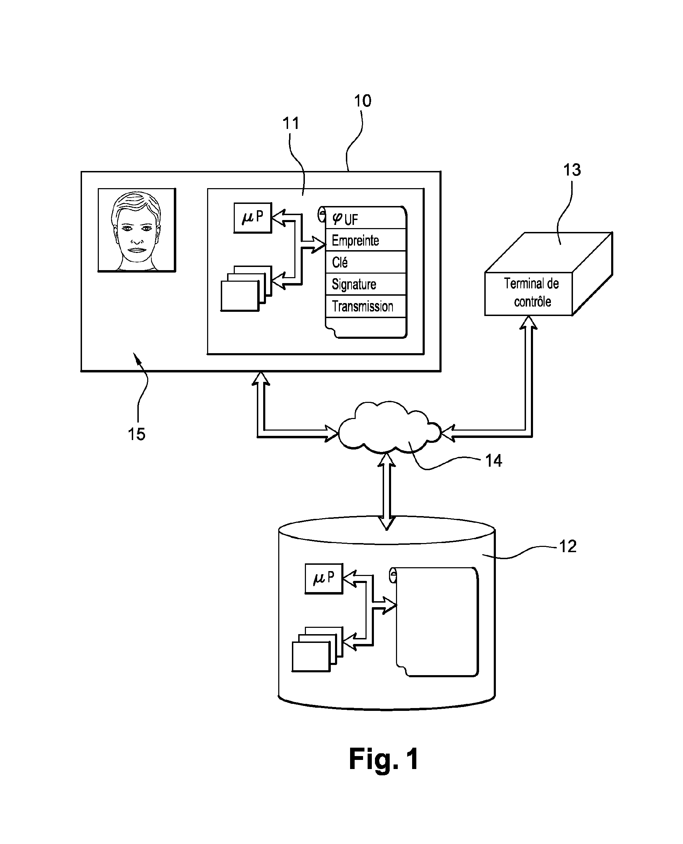

La figure 1 montre l'ensemble des moyens schématiquement nécessaires pour mener à bien le procédé de sécurisation d'un document 10 incorporant une puce 11 électronique.

Dans la présente invention, le mot « document » réfère à tout type de document incorporant une puce électronique et des informations notamment portant des inscriptions à lire telles que des mentions variables (nom, prénom, adresse, photos,... d'un titulaire ou des parties à un contrat...) et/ou des mentions communes (motifs sécuritaires, matrices, cadres, noms de champ, sceaux, hologrammes,...). Un tel document peut être, par exemple et en particulier, un passeport, un visa, une carte d'identité, un permis de conduire, une carte bancaire, une carte de contrôle d'accès, un badge, une étiquette RFID, un acte légal, un contrat, ou un article quelconque.

La puce électronique 11 du document 10 est un composant électronique de type microcircuit intégré. Dans un mode de réalisation, la puce 11 est adaptée à la technologie de communication sans contact, par exemple telle que celle décrite dans la norme ISO 14443. Dans un autre mode de réalisation, la puce 11 est adaptée à la technologie de communication avec contact, par exemple telle que celle décrite dans la norme ISO 7816. Dans une autre variante, la puce 11 peut être un microcircuit intégré hybride permettant à la fois une lecture avec contact et une lecture sans contact. De telles puces électroniques sont relativement bien connues de l'état de la technique et ne nécessitent pas une description détaillée.

La puce électronique 11 comporte une mémoire de données apte à stocker des données de contrôle destinées à vérifier l'identité de l'entité à laquelle le document 10 est destiné à être attribué. Ces données de contrôle comportent par exemple le nom, le prénom, la date de naissance, l'empreinte biométrique d'un ou plusieurs doigts ou de l'oeil, la photographie du visage ou de la tête. Dans le cas d'un animal, ces données de contrôle peuvent comporter la date de naissance de l'animal, sa race. Les données de contrôle sont encodées par des moyens traditionnels afin de rendre difficile leur accès par des moyens non habilités.

Durant une phase d'enrôlement /personnalisation, le document 10 à travers la puce électronique 11 communique avec un serveur 12 de confiance. Dans un mode de réalisation, cette communication peut être faite à travers un réseau 14 de communication sécurisé câblé ou hertzien. Dans un autre mode de réalisation, le serveur 12 comporte des circuits d'interface sans contact ou avec contact permettant respectivement une communication sans contact ou avec contact avec la puce électronique 11. Le serveur 12 est capable d'activer et d'authentifier la puce 11, de lire des données qui sont contenues dans la puce 11, de recevoir ces données, et le cas échéant, de les modifier voire de les supprimer partiellement ou totalement.

Durant une phase de contrôle, le document 10 à l'aide de la puce électronique 11 est capable de communiquer avec un terminal de contrôle 13. Ce terminal de contrôle 13 désigne tout dispositif qui permet de communiquer avec la puce électronique 11, de l'activer, de l'authentifier, de lire des données qui y sont contenues et/ou, de recevoir ces données. Le terminal de contrôle peut fonctionner à distance ou nécessiter un contact avec la puce 11.

Le terminal de contrôle 13 communique avec le serveur 12 de confiance à travers un réseau 14 de communication, de préférence sécurisé, câblé ou hertzien.

Dans le présent contexte, on entend par le terme « contrôle », une opération de type authentification et identification du document 10 et de la puce électronique 11. De manière générale, un contrôle d'un document 10 correspond à toute opération qui permet à une entité de contrôle de vérifier que le document n'a pas été modifié ou altéré et que la puce électronique 11 n'a pas été contrefaite.

Le procédé de sécurisation de l'invention est renforcé par la présence d'une fonction physiquement non copiable PUF acronyme venant de l'expression anglo-saxonne « Physically Unclonable Function ». Cette fonction est intégrée dans la puce électronique 11 et selon certains modes de réalisation dans le terminal 13.

Dans la suite de la description, seules les étapes intéressant le plus directement l'invention sont représentées.

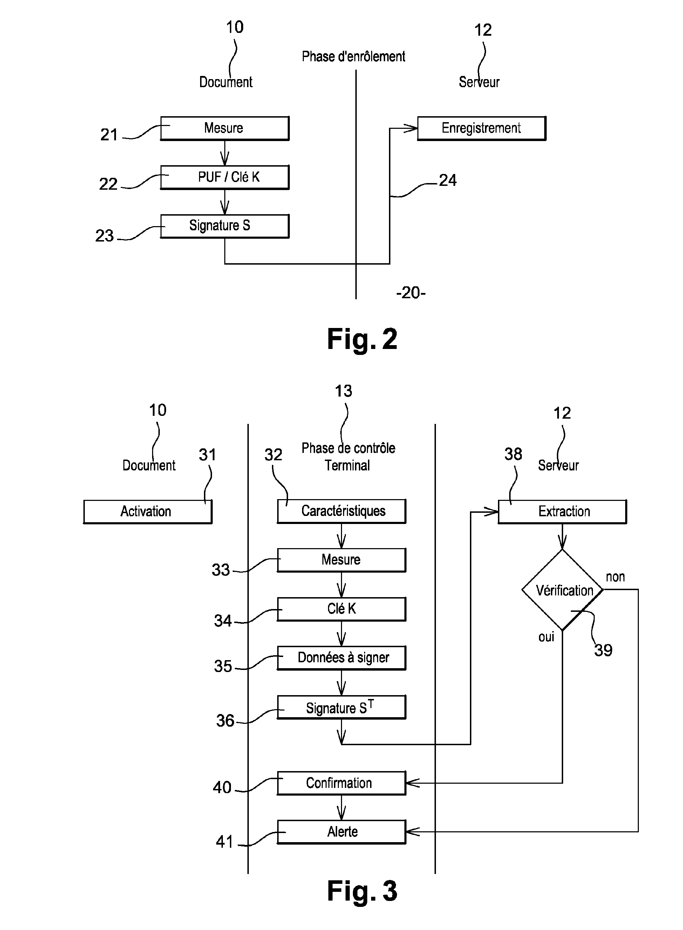

La figure 2 montre un exemple de phase d'enrôlement 20 du document 10 auprès du serveur 12. Cette phase d'enrôlement 20 est mise en oeuvre lors de la conception du document 10. Dans un mode de réalisation préféré, cette phase est exécutée lors de la personnalisation de la puce 11.

La figure 2 montre une étape préliminaire 21 dans laquelle une mesure d'une grandeur physique mesurable du document 10 est effectuée. Dans un mode de réalisation, cette mesure peut être réalisée à l'aide d'un module de mesure d'un équipement de la machine de fabrication ou de personnalisation. Dans un autre mode de réalisation, ce module de mesure est incorporé dans la puce 11.

La grandeur mesurée est un attribut d'un phénomène ou d'un corps, susceptible d'être identifié qualitativement et déterminé quantitativement. Elle peut être relative à des grandeurs du composant électronique telles que notamment les grandeurs physiques du silicium ou les variations du processus de fabrication de la puce électronique 11. La grandeur mesurée peut également être relative à des grandeurs de l'antenne lorsqu'on est en sans contact. Elle peut également être relative aux grandeurs du support 15 du document 10 qui peut être du papier, du polycarbonate... Elle peut également être relative aux grandeurs de l'encre d'impression du document 10. La liste n'est bien entendue pas exhaustive.

Dans la description, le fonctionnement de la fonction PUF et des modules de mesure n'est pas détaillé car relativement assez connu de l'homme du métier.

A une étape 22, une clé secrète K est générée en fonction de la fonction PUF et de la mesure obtenue à l'étape 21. Cette clé K peut être déterminée selon l'équation suivante : K = f(c) ; où f est une fonction de type PUF ; et où c'est la mesure de la grandeur physique. La clé secrète fournie par la fonction PUF en sortie constitue une empreinte numérique du document 10. Cette empreinte numérique caractérise intrinsèquement de manière unique le document 10. Comme il est pratiquement impossible de modéliser, copier ou contrôler les variations du processus de fabrication d'un circuit intégré ou d'un support 15 dudit document, les PUFs rendent ces composants ou support non seulement uniques, mais aussi inclonables car une telle fonction PUF fournit la même valeur de résultat pour une même valeur d'entrée. Elles procurent donc un mécanisme sécurisé, robuste et à faible coût.

L'étape 22 permet ainsi de produire une clé cryptographique de manière sécurisée à partir d'une PUF de la puce électronique 11 ou du support du document 10. L'étape 22 peut être exécutée par la puce électronique 11 ou par un équipement externe.

A une étape 23, au moins une donnée de contrôle du document 10 est signée avec la clé secrète K. Cette signature est ensuite transmise au serveur 12 en vue de sa mémorisation pour une phase de contrôle ultérieure. Cette signature est utilisée afin de mettre en place un mécanisme d'authentification du document 10.

Les données de contrôle peuvent correspondre à des images, à des données, et/ou à des dessins présents sur le document 10. Ils peuvent être entre autres un nom, un prénom, une adresse, une photo, un motif sécuritaire, un sceau, un hologramme, des empreintes biométriques... Le type et le nombre de données de contrôle à signer à l'étape 23 peuvent être définis par défaut par un administrateur du serveur 12 ou de manière aléatoire.

Dans un mode de réalisation, l'administrateur du serveur ou le serveur 12 définit préalablement le ou les grandeurs mesurables de la puce 11 ou du support du document 10 à mesurer pour générer les clés. Ils définissent également le type et le nombre de données à signer. Dans un mode de réalisation, les données sont signées avec chacune des clés secrètes K générées. Dans un autre mode de réalisation, chaque donnée peut être signée avec une clé secrète K qui lui est propre. Les différentes données chiffrées sont classifiées et stockées dans une base de données du serveur 12. Le serveur 12 de confiance est en général géré par l'émetteur du document 10. Il peut être par exemple un serveur d'un Etat.

La figure 3 montre un mode de réalisation d'une phase de contrôle 30 du document 10. Cette phase de contrôle est de préférence réalisée en temps réel. Lors de cette phase de contrôle, le terminal 13 peut accéder à la base de données du serveur 12, via une communication sécurisée d'une connexion réseau filaire ou sans fil.

La phase de contrôle 30 comporte une phase préliminaire 31 dans laquelle la puce électronique 11 est activée. Lorsque la puce 11 est sans contact, un champ radio émis par le terminal de contrôle 13 active ladite puce. Lorsque la puce est avec contact, cette dernière est insérée dans un lecteur de carte du terminal 13 en vue de son activation.

A une étape 32, le terminal 13 collecte le ou les grandeurs physiques du support du document 10 ou de la puce 11 à mesurer. Dans un mode de réalisation, ces grandeurs sont définies par défaut lors de la conception du terminal 13. Dans ce cas, le terminal 13 extrait de sa base de données la liste des grandeurs à mesurer. Dans une variante, lorsque la puce 11 est activée, le terminal 13 envoie une requête de la liste de grandeurs à mesurer à destination du serveur 12. En réponse, le serveur 12 extrait une liste par défaut ou l'élabore de manière aléatoire. Cette liste est ensuite transmise au terminal 13.

A une étape 33, le terminal 13 effectue les mesures correspondant à l'aide de capteur de mesures dudit terminal. A une étape 34, le terminal active la fonction PUF qui génère pour chaque grandeur mesurée une clé secrète K.

A une étape 35, le terminal 13 collecte le nombre et le type de données à signer. Dans un mode de réalisation, ce nombre et ce type sont définis par défaut lors de la conception du terminal 13. Dans ce cas, le terminal 13 extrait de sa base de données le(s) type(s) et le nombre de données à signer. Dans une variante, le terminal 13 transmet au serveur 12 une requête en vue d'obtenir le nombre et le type de données à signer. En réponse, le serveur 12 extrait de sa base de données une liste par défaut ou l'élabore de manière aléatoire. Cette liste est ensuite transmise au terminal 13. A une étape 36, le terminal 13 signe chaque donnée collectée avec la clé secrète K .

Dans un autre mode de réalisation, le terminal 13 collecte le nombre et le type de données à signer ainsi que le type de grandeur physique à mesurer qui est associé à chaque type de donnée. Dans ce cas, à l'étape 36, le terminal 13 signe chaque donnée collectée avec sa clé secrète K associée.

A une étape 37, le terminal 13 transmet au serveur 12 la signature calculée pour chaque donnée. A réception, le serveur 12 extrait, à une étape 38, de sa base de données le ou les signatures correspondantes issues de l'enrôlement. A une étape 39, le serveur 12 compare le ou les signatures extraites avec celles reçues à l'étape 37. Si le ou les signatures correspondent, le serveur 12 élabore un message de confirmation de l'authenticité du document 10 et de la puce 11 incorporée. Ce message est ensuite transmis au terminal 13, à une étape 40. Si au moins une des signatures ne correspond pas, le serveur 12 élabore un message d'alerte et le transmet au terminal 13, à une étape 41.

Dans un autre mode de réalisation, les étapes 32 à 36 peuvent être effectuées par la puce. Dans ce cas, la puce peut accéder à la base de données du terminal 13 et du serveur 12 via le terminal 13 de manière sécurisée. De même, l'étape de vérification 39 peut être exécutée par le terminal 13 ou par la puce 11.

De manière générale, la vérification de l'authenticité du document 10 nécessitera donc la création préalable d'une table de référence dans le serveur 12 associée à un numéro d'identification/de série du document 10 et contenant les signatures correspondant à une série de défis tirés aléatoirement ou définis par défaut. Un défi est relatif ici à la donnée à signer et à la grandeur à mesurer pour générer la clé secrète. Cette étape est de préférence engagée avant la mise en circulation du document. La vérification ultérieure de l'authenticité se fera en soumettant, après lecture du numéro d'identification/de série, l'un des défis attachés à ce document 10 et en vérifiant que le document 10 fournit la réponse attendue.

Dans un exemple d'implémentation du procédé d'invention, le document 10 est un passeport muni d'une puce électronique sans contact. Dans cet exemple, lors de sa conception le serveur 12 choisit de manière aléatoire quatre grandeurs du passeport à mesurer parmi un nombre de grandeur prédéfini. Ces quatre grandeurs sont relatives à l'antenne, à la couverture du passeport, à une page du passeport et à la couche silicium de la puce 11. Une clé secrète est générée selon la fonction PUF et la mesure correspondante pour chaque grandeur choisie. Le serveur 12 choisit de manière aléatoire quatre données de contrôle du passeport parmi un nombre de données de contrôle prédéfini. Ces quatre données de contrôle sont une empreinte biométrique stockée dans la puce, un nom et un prénom inscrits sur une page du passeport et un hologramme porté sur la couverture du passeport. Le serveur définit également quel type de grandeur à mesurer est associé à quel type de donnée de contrôle de sorte que chaque donnée de contrôle soit signée avec une clé qui lui est propre.

Selon cette implémentation, l'empreinte biométrique est signée avec la clé secrète générée avec la mesure des grandeurs de l'antenne. Le nom est signé avec la clé secrète générée avec la mesure des grandeurs de la couche de silicium de la puce. Le prénom est signé avec la clé secrète générée avec la mesure des grandeurs de la couverture du passeport. L'hologramme est signé avec la clé secrète générée avec la mesure des grandeurs d'une page du passeport. Ces signatures sont ensuite classifiées et stockées dans la base de données du serveur.

Lorsque le passeport est en phase de contrôle devant un douanier, un mécanisme d'authentification défi/réponse peut être déclenché. Dans ce cas, le terminal de contrôle du douanier émet à destination du serveur une requête d'authentification du passeport. Le serveur en réponse fournit un message de demande de signature contenant le type de donnée à signer et la grandeur à mesurer associée. Dans cet exemple, le message peut être « empreinte biométrique, antenne ». A réception, une clé secrète PUF est générée selon la mesure des grandeurs de l'antenne. L'empreinte biométrique extraite de la puce est signée avec cette clé secrète. Cette signature est ensuite transmise au serveur en vue de sa vérification.

Si les deux signatures sont conformes, le serveur peut transmettre un autre message de demande de signature contenant un autre type de donnée à signer et de grandeur à mesurer associée. Et ainsi de suite jusqu'à ce que le nombre de défi/réponse prédéfini soit atteint. Il peut être envisagé que le nombre de défi réponse est une fois. Il peut également être envisagé que, par défaut, pour tous les passeports, les données à contrôler sont le nom, le prénom et la date de naissance inscrits sur le support dudit passeport et que ces données sont signées avec la même clé générée en fonction d'une mesure des grandeurs de la couche de silicium de la puce.

L'invention n'est pas limitée aux modes de réalisation ci-dessus décrits. Elle peut être implémentée selon plusieurs autres modes de réalisations avec une grandeur essentielle qui est d'associer des données inscrites sur le support du document ou stockées dans la puce du document avec des grandeurs physiques dudit support ou de ladite puce.

## Revendications

1. - Procédé de sécurisation d'un document électronique dans laquelle une puce électronique est incorporée dans un support dudit document, ledit procédé comprenant les étapes suivantes :
- détermination d'une empreinte numérique du document en fonction d'une mesure d'une grandeur physique de la puce électronique ou du support dudit document,
- signature d'au moins une donnée de contrôle portée sur le support ou stockée dans la puce avec l'empreinte numérique du document,
- stockage de cette signature dans un serveur de vérification pour une phase ultérieure de contrôle de l'authenticité du support et de la puce du document.

2. - Procédé selon la revendication précédente, dans lequel la phase de contrôle comporte les étapes suivantes :
- activation de la puce électronique du document par un terminal de contrôle interposé entre ledit document et le serveur de vérification,
- détermination d'une empreinte numérique du document en fonction d'une mesure d'une grandeur physique de la puce électronique ou du support dudit document,
- signature d'au moins une donnée de contrôle portée sur le support ou stockée dans la puce avec l'empreinte numérique du document,
- comparaison de cette donnée de contrôle signée avec celle stockée dans le serveur,
- si les deux signatures concordent, le document est considéré comme authentique, en cas de non concordance le support ou la puce électronique sont considérés comme altérés ou modifiés.

3. - Procédé selon l'une des revendications précédentes, dans lequel la détermination de l'empreinte numérique du document comporte les étapes suivantes :
- détermination d'au moins une grandeur physique mesurable de la puce électronique ou du support du document,
- mesure de ladite grandeur,
- génération d'une clé secrète K en fonction de l'équation suivante : K=f(c) où f est la fonction PUF et c la mesure de la grandeur, cette clé secrète correspondant à l'empreinte numérique du document.

4. - Procédé selon la revendication précédente, dans lequel la grandeur mesurable est une caractéristique physique :
- de la couche silicium de la puce ou des variations du processus de fabrication de ladite puce,
- d'une antenne de la puce,
- au support du document, ou
- d'une encre d'impression du document.

5. - Procédé selon l'une des revendications 2 et 3, dans lequel le type et le nombre de grandeurs à mesurer sont définis par défaut ou de manière aléatoire.

6. - Procédé selon l'une des revendications précédentes, dans lequel une donnée de contrôle est :
- une donnée inscrite sur le support du document de type nom, date de naissance, prénom, adresse, photo, motif sécuritaire, sceau ou hologramme, ou
- une donnée stockée dans une mémoire de la puce électronique du type empreinte biométrique, nom, prénom, date de naissance, adresse, ou photo.

7. - Procédé selon l'une des revendications précédentes, dans lequel le type et le nombre de données de contrôle à signer sont définis par défaut ou de manière aléatoire.

8. - Procédé selon l'une des revendications précédentes, dans lequel à chaque donnée à contrôler est associée une grandeur physique mesurable unique, chaque donnée étant ainsi signée avec une clé qui lui est propre.

9. - Procédé selon l'une des revendications précédentes, dans lequel la phase de contrôle comporte un mécanisme de défi-réponse dans lequel le serveur émet un défi correspondant à un type de grandeur physique à mesurer et reçoit en réponse, en provenance du terminal de contrôle ou de la puce, une signature avec une clé générée en fonction du défi.

10. - Procédé selon l'une des revendications précédentes, dans lequel le support est du papier ou du polycarbonate.

11. - Procédé selon l'une des revendications précédentes, dans lequel la puce électronique du document est une puce sans contact ou avec contact.

12. - Système de sécurisation de document électronique comprenant un serveur de confiance de vérification interposé entre un document électronique dans lequel une puce électronique est incorporée dans son support et un terminal de contrôle, ledit système comprenant des moyens aptes à exécuter le procédé de sécurisation, selon l'une des revendications précédentes.
